Europäisches Patentamt

European Patent Office

Office européen des brevets

(19)

(11) EP 0 783 997 B1

(12) EUROPEAN PATENT SPECIFICATION

(45) Date of publication and mention
of the grant of the patent:
**18.08.2004 Bulletin 2004/34**

(51) Int Cl.$^7$: **B60R 21/26**, C06D 5/06

(21) Application number: **95932221.5**

(86) International application number:
**PCT/JP1995/001926**

(22) Date of filing: **25.09.1995**

(87) International publication number:
**WO 1996/010494 (11.04.1996 Gazette 1996/16)**

(54) **GAS GENERATOR**

GASGENERATOR

GENERATEUR DE GAZ

(84) Designated Contracting States:
**DE FR GB IT SE**

(30) Priority: **30.09.1994 JP 26172594**
**31.03.1995 JP 9979995**
**26.06.1995 JP 18345395**

(43) Date of publication of application:
**16.07.1997 Bulletin 1997/29**

(60) Divisional application:
**03016047.7 / 1 359 065**

(73) Proprietor: **Nippon Kayaku Kabushiki Kaisha
Tokyo 102-8172 (JP)**

(72) Inventors:
• **ITO, Yuji Himeji Factory,
Toyotomicho Himeji-shi Hyogo 679-21 (JP)**
• **SATO, Eishi Himeji Factory,
Toyotomicho Himeji-shi Hyogo 679-21 (JP)**
• **MINOGUCHI, Ryo, Sensor Technology Co., Ltd.,
Toyotomicho, Himeji-shi, Hyogo 679-21 (JP)**
• **TAGUCHI, Michihisa,
Sensor Technology Co., Ltd.
Toyotomicho, Himeji-shi, Hyogo 679-21 (JP)**
• **OTA, Kozo, Sensor Technology Co., Ltd.,
Toyotomicho Himeji-shi Hyogo 679-21 (JP)**
• **HINO, Rei, Sensor Technology Co., Ltd.
Toyotomicho Himeji-shi Hyogo 679-21 (JP)**

(74) Representative:
**Leson, Thomas Johannes Alois, Dipl.-Ing. et al
Patentanwälte
Tiedtke-Bühling-Kinne & Partner,
Bavariaring 4
80336 München (DE)**

(56) References cited:
**DE-A- 4 419 519          GB-A- 2 022 194
JP-A- 3 132 447          JP-A- 6 032 690
JP-B- 52 004 060          US-A- 4 886 293**

• **PATENT ABSTRACTS OF JAPAN vol. 015, no.
339 (M-1152), 28 August 1991 (1991-08-28) & JP
03 132447 A (NIPPON KOKI KK), 5 June 1991
(1991-06-05)**
• **THE EDITORIAL COMMITTEE OF MECHANICAL
DESIGN HANDBOOK, "New Mechanical Design
Handbook", 20 September 1977, (Tokyo),
MARUZEN K.K., pages 756-758.**

Remarks:
The file contains technical information submitted
after the application was filed and not included in this
specification

EP 0 783 997 B1

**Description**

FIELD OF THE INVENTION

This invention relates to a gas generator for use in inflating an airbag in a vehicle, and more particularly to a gas generator capable of allowing a burning rate of gas generants to fall within a prescribed range without affection by a change in the ambient temperature.

BACKGROUND OF THE INVENTION

As is well known, it is customary at the present time to use sodium azide as a base for gas generants in a gas generator for use in inflating an airbag. The prior art gas generator produces nitrogen when the gas generants are ignited in a combustion chamber. The prior art gas generator includes coolants and filters for eliminating slag and mist. Principally, a burning rate of the gas generants, i.e. the speed at which gas is produced, is dependent upon the shape of the gas generants. For example, when gas is produced from pelletized gas generants, a suitable speed is dependent upon the outer diameter and the thickness of each pellet.

However, the burning rate of the gas generants is naturally affected by a change in the ambient temperature since the gas generator is required to work in an wide ambient temperature range from -40 °C to +85 °C, for example, in case of the prior art gas generator adapted to work at the ambient temperature of +25 °C, the burning rate is low at the ambient temperature of -40 °C and the burning rate is high at the ambient temperature of +85°C .

There have been prior proposals to solve the aforesaid problem, such as the one disclosed in U.S. Patent No. 5,269,561 and Japanese Laid open Patent Application No.'88-141851, wherein the gas generator has a relief valve which is opened at the high ambient temperature so as to prevent an excessive amount of gas admitting into an airbag and thereby prevent an abnormally increased internal pressure.

As disclosed in Japanese Laid Open Patent Application No. 90-74442, a further previously proposed arrangement is designed to automatically increase an opening area of gas outlets when the ambient temperature is high.

When the gas generants used contains sodium azide as a base, the aforesaid types of the prior art gas generator are effective to some extent. However, the aforesaid types of the prior art gas generator fall short of our expectation when the gas generants are combinations of oxidizer and componds containing nitrogen except azides.

The reason for the contrariness to our expectation has been found to be a pressure exponent. The burning rate r (1/sec) of explosives are generally known to be given by

$$r = 1/t = kP^n$$

where

   t = time required for combustion [sec]
   k constant number
   P = pressure [kgf/cm$^2$]
   n = pressure exponent

In case of the gas generants mainly constituted by sodium azide, $\underline{n}$ is such a small value falling in a range from 0.3 to 0.4. Accordingly, a remarkable increase of the burning rate does not cause even at the high temperature of +85 °C where the gas has a high pressure. However, when the gas generants are mixtures of oxidizer and compounds containing nitrogen except inorganic azide, $\underline{n}$ is such a large value falling in a range from 0.4 to 1.0. Accordingly, the burning rate of the gas generants are greatly affected by the change in the ambient temperature.

Consequently, in case of the gas generator having the relief valve at the high ambient temperature, the relief valve can not have a size large enough to release the excess gas towards exterior. Therefore, the internal pressure of the gas generator can not be kept appropriate pressure. Also, in case of the gas generator designed to automatically increase the opening area of the gas outlets at the high ambient temperature, an increase of the opening area of the gas outlets can not follow an increase of the internal pressure of the gas generator and the internal pressure of the gas generator can not fall down into the appropriate pressure. So that the airbag may be torn, further a case, the gas generator's casing may be ruptured. In order to solve this problem at the high ambient temperature, when the opening area of the gas outlets is excessively increased, a time delay may be brought into the inflating the airbag at the low ambient temperature.

In brief, it is difficult to design the gas generator employing the non-azide gas generants to an optimum shape. In order to prevent the time delay being brought into the inflating the airbag, the gas generator may be designed so as to be adapted to the low ambient temperature. Therefore, the burning rate and the gas pressure tend to be high.

Consequently, even if the gas generator is provided with either the relief valve or the gas outlets of which opening area increases automatically as the ambient temperature increases, a construction concerning a case of the gas generator must be strong enough to withstand the high pressure. Therefore, the gas generator becomes heavy and large.

US-A-4,886,293, which discloses the features of preamble of claim 1 and describes a gas producer for filling a gas cushion restraining device for occupants of vehicles. The gas producer includes a housing, a combustion chamber surronded by a wall which exhibits apertures for the discharge of the gas produced. The apertures are sealed hermtically by a cover destructible upon corresponding pressure evolution on the upstream side of the apperture respective to the gas flow.

In view of the aforesaid problems, a principal object of this invention is providing a gas generator to be able burning gas generants with stability and keeping a riskless burning rate even when employing such non-azide gas generants of which burning rate is greatly affected by the change in the ambient temperature, in particular a gas generator having an improved gas pressure characteristic and pressure characteristic, in general.

## SUMMARY OF THE INVENTION

This study was made by the present inventors with a gas generator according to claim 1 having openings through which a gas produced from gas generants are allowed to pass and further having rupture plates which abut against the interior wall surface of the gas generator so as to mask said openings . Each rupture plate is arranged on a side of upper stream with respect to each opening in a direction of a flow of the produced gas. This study has revealed that the control over the burning rate of the gas generants can be readily carried into effect by properly setting the bursting pressure (i.e. tensile strength) for the rupture plate even when the gas generants are combinations of oxidizer and fuel including the compounds containing nitrogen except inorganic azide (it will be hereafter described as non-azide gas generants).

More specifically stated, the thickness t [cm] of each rupture plate should be given by

$$t = (B \times D)/A \tag{1}.$$

where

    B = parameter assuming a value ranging from 8 to 40 in this study,
    D = circle equivalent diameter of the opening (i.e. diffuser) [cm],
    A = tensile strength of the rupture plate [$kgf/cm^2$].

The above opening has a shape of a precise circle or an approximate circle. Therefore, a single word of diameter is not used herein but the expression 'circle equivalent diameter' is used herein. For example, the opening may take the form of an oblong or a composite of an ellipse and a circle of which the ratio of a major axis to a minor axis is less than 1.2. In case of this approximate circle, the circle equivalent diameter is the diameter of a precise circle with an area equal to an area of the approximate circle.

When the value of B is less than 8, an insufficient burning rate or un-burnt residues will be encountered. When the value of B is greater than 40, the burning rate becomes so high that then casing of the gas generator may be destroyed.

When a rupture plate satisfies the equation (1) , the bursting pressure for the rupture plate can be precisely set at a required value which is less than, e.g., 100 [bars] irrespective of the material for the rupture plate even when the non-azide gas generants which are combinations of oxidizer and fuel including the compounds containing nitrogen except inorganic azide are used. Therefore, the non-azide gas generants depending on pressure highly can be properly burnt.

Consequently, when the maximum internal pressure allowable for the gas generator is designed so as to be lower than 100 [bars] by the equation (1), a compact arrangement requiring less space will be attained. And when the internal pressure is designed so as to be required value by the equation (1), a variation of characteristics concerning the burning rate will be small over through a wide range of ambient temperatures between -40 °C and +85 °C .

When the gas generator has a plurality of openings with rupture plates, each of them has to satisfy equation (1). All circle equivalent diameters D of the openings need not be equal to each other. For example, when openings have different circle equivalent diameters $D_1$, $D_2$, $D_3$ of which lengths are longer in order of $D_1 > D_2 > D_3$, the same effect of the present invention as above will be attained if only each opening satisfies the equation (1). A plurality of openings having different circle equivalent diameters D and respectively satisfying equation (1) make it possible to obtain improved reliability in controlling the gas pressure within the gas generator. Consequently, even if the burning rate of the gas generants fluctuates to some extent, the fluctuations of the gas pressure within the gas generator can be confined within a small tolerance.

Further, it is preferable that the ratio of the total area of the openings to the amount of the produced gas should be greater than or equal to 0.143 [$cm^2$/liter] in the standard state (i.e. at 1 atmosphere and at 273 K) in order to prevent the gas pressure in the gas generator from becoming excessively high when the circle equivalent diameter D is extremely small. When the aforesaid ratio is less than 0.143 [$cm^2$/liter], the gas pressure increases by the resistance in each opening. Whereby the control over the gas pressure by means of the rupture plate is made less effective. This value of 0.143 [$cm^2$/liter] has been conducted on the basis of a variety of combustion tests employing the non-azide gas generants.

When a plurality of openings have different circle equivalent diameters and respectively satisfy equation (1), and when the ratio of the total area of openings to the amount of produced gas is greater than or equal to 0.143 [$cm^2$/liter] in the standard state (i.e. at 1 atmosphere and at 273 K), the gas pressure within the gas generator is not built up above 100 [bars] and is maintained at a predetermined pressure level at any ambient temperature ranging between -40 °C and +85 °C. Consequently, even when the non-azide gas generants are used, the time delay can be prevented from being introduced into the inflating the airbag at the low ambient temperature, and the airbag and the gas generator can be prevented from being ruptured at the high ambient temperature.

Any materials can be employed as the rupture plates if only the rupture plates satisfy equation (1). For example, the rupture plate may be made up of a metal foil, a metal sheet, a graphite sheet or a heat resistant polymer sheet. The metal foil or the metal sheet may be made up of a stainless steel, an aluminum alloy, a magnesium, a titanium, a titanium alloy, a copper, a copper alloy, a nickel, a nickel alloy, a zinc or a zinc alloy.

A rupture plate made by a kind of a metal has a advantage of a stable tensile strength although it must be formed into thin with high accuracy because of its high tensile strength. On the contrary, in case of a rupture plate made by a kind of a non-metal material such as a graphite sheet, a thick rupture plate can be used because of its low tensile strength in comparison with metal materials, however, it can be easily ruptured by external force. In order to use of the each advantage of metal materials and non-metal materials, one rupture plate may consist of the metal plate and the non-metal plate which are piled with each other. In this case, a thickness of the rupture plate can be obtained by the following manner. At first, thicknesses of the metal plate and the non-metal plate are calculated from equation (1) respectively.

And the thickness of the rupture plate is obtained by means of adding the thicknesses of the metal plate and the non-metal plate together. That is to say, in case that one rupture plate is formed to pile with a plurality of plates made of different materials, the addition rule holds good for the equation (1).

According to another aspect of the invention, the rupture plates are preferably made of the non-metal materials in whole or in part, further preferably, the non-metal materials have melting points which are higher than or equal to 500°C In case rupture plates made of the non-metal materials having melting points which are lower than 500 °C , strengths of the rupture plates deteriorate when they are exposed to the high-temperature gas for a only short time. Consequently, the desired strengths against bursting can not be attained. On the contrary, in case rupture plates made of the non-metal materials having melting points which are higher than or equal to 500 °C , strengths of the rupture plates can keep initial strengths even if they are exposed to the high-temperature gas. Accordingly, an initial pressure and an initial temperature of the gas within the gas generator can be kept.

The non-metal materials of which strengths are lower than those of metal materials can be selected.

Accordingly, it becomes easy to control over the pressure within the gas generator by means of thicknesses of the rupture plates. Consequently, appropriate burning rate is obtained by means of an assured controling over the pressure within the gas generator. And the gas pressure within the gas generator can be prevented from being abnormally built up even at the high ambient temperature. Therefore, the casing of the gas generator is allowed to have thin walls, and a compact and light-weight arrangement is attained.

It is preferable that rupture plates are made by flexible non-metal materials. When the rupture plates made by flexible nonmetal materials, each rupture plate fits in well with each of a plurality of openings through which the produced gas is allowed to pass, whereby it can be easily to keep airtightly. In this case, the rupture plates will be ruptured sequentially instead of being ruptured simultaneously . Because there is a fine difference in the flexural modes between one rupture plate and another. The sequential rupture makes it easy to set the bursting pressure at a prescribed value. Graphite, ceramics or heat resistant plastics containing fillers may be suitable for use as the flexible non-metal materials for the rupture plates. Such materials make it easy to hold down the internal pressure of the gas generator to an intensity below 100 [bars]. It is especially easy to procure graphite sheet having a fixed thickness, high melting point and flexibility.

The mechanical strength of the graphite increases as the temperature is increased. The mechanical strength of graphite at the temperature of 2,500 °C is about two times as high as that at the room temperature.

In addition, the melting point of the graphite is higher than 2,500 °C . Although graphite or other forms of carbon begins to be oxidized at about 400 °C in an atmosphere of oxygen, exposure to a high-temperature gas in the gas generator does not last long enough to allow oxygen to cause an adverse effect but ends within 100 milliseconds. Accordingly, a graphite sheet or a sheet mainly constituted by the graphite is preferred as a material for the rupture plate.

It is easy to obtain a prescribed burning rate of the gas generants according to the gas generator provided with rupture plates as described above. Therefore, the gas generator provided with rupture plates as described above is suitable for the gas generator employing any kind of gas generants, especially, suitable for the gas generator employing the non-azide gas generants.

At least one selected from the group consisting of tetrazole derivatives, guanidine derivatives, azodicarbonamide derivatives, hydrazine derivatives and triazole derivatives may be suitable for use as compounds containing nitrogen to constitute the non-azide gas generants.

More specifically stated, azodicarbonamide, guanidine, triaminoguanidine nitrate, guanidine nitrate, guanidine carbonate, tetrazole, 5-aminotetrazole, 5,5'-bi-1H-tetrazole, 5-oxo-1,2,4-triazole, hexamethylenetetramine, dicyandiamide, biuret, hydrazine, carbohydrazide, oxalic acid dihydrazide and hydrazine chloride may be used.

There are suitable examples of the non-azide gas generants, which are resulting compounds of reacting a compound which contains at least one $-NH_2$ or $-NH-$ in a structural formula with an organic compound which contains at least one $-CHO$ in a structural formula or which can form $-CHO$ in a structural formula .

The gas generants prepared by reacting the organic compound which contains at least one $-CHO$ in the structural formula with the compound which contains at least one $-NH_2$ or $-NH-$ in the structural formula is convenient for the safe prosecution of handling work.

Examples of the compound which contains at least one $-NH_2$ or $-NH-$ in the structural formula are azodicarbonamide, guanidine, triaminoguanidine nitrate, guanidine nitrate, guanidine carbonate, tetrazole, 5-aminotetrazole, 5,5'-bi-1H-tetrazole, 5-oxo-1,2,4-triazole, hexamethylenetetramine, dicyandiamide, biuret, hydrazine, carbohydrazide, oxalic acid dihydrazide, hydrazine chloride, urea and melamine. At least one of these compounds are used for preparing the gas generants.

Examples of the organic compound which contains at least one $-CHO$ in the structural formula are formaldehyde (alias methanal), acetaldehyde (alias ethanal), propionaldehyde (alias propanal), n-butyraldehyde (alias butanal), n-valeraldehyde (alias pentanal), n-caproic aldehyde (alias hexanal), acrolein (alias propenal), crotonaldehyde and glyoxal. At least one of these organic compounds are used for preparing the gas generants.

Examples of the organic compound which can yield $-CHO$ in the structural formula are paraformaldehyde $HO(CH_2O)_n H$, trioxan $(CH_2O)_3$ and hexamethylenetetramine $(CH_2)_6N_4$. At least one of these organic compounds are used for preparing the gas generants.

Examples of the oxidizer to be combined with fuel including the compounds containing nitrogen except the inorganic azide are nitrate, oxo-halogenate and metal oxide.

Examples of the nitrate are sodium nitrate, potassium nitrate, barium nitrate, ammonium nitrate and strontium nitrate.

Examples of the oxo-halogenate are chlorate, perchlorate, bromate, perbromate, iodate and periodate.

Examples of the metal oxide are manganese dioxide, ferric oxide, zinc peroxide, potassium peroxide, potassium permanganate and barium peroxide. At least one of these metal oxides are used for preparing the gas generants.

BRIEF DESCRIPTION OF THE DRAWINGS

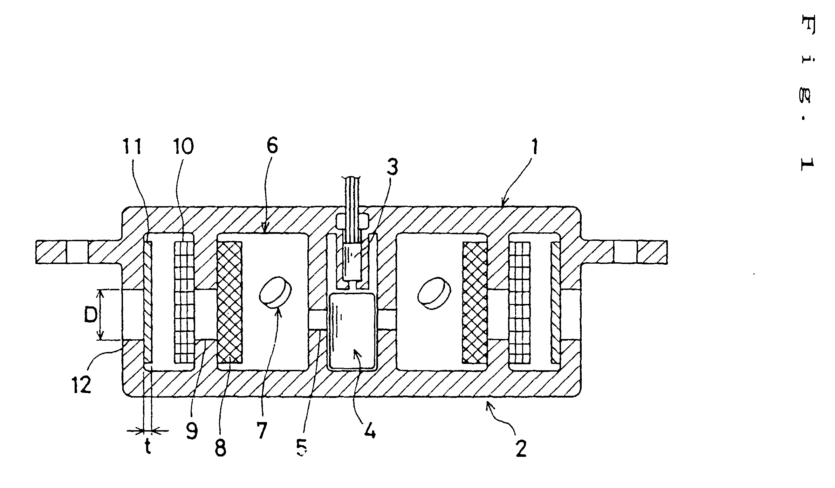

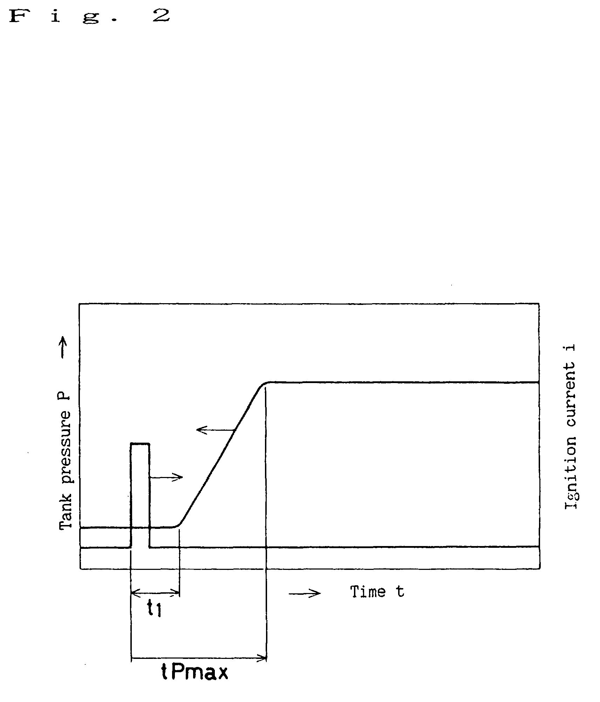

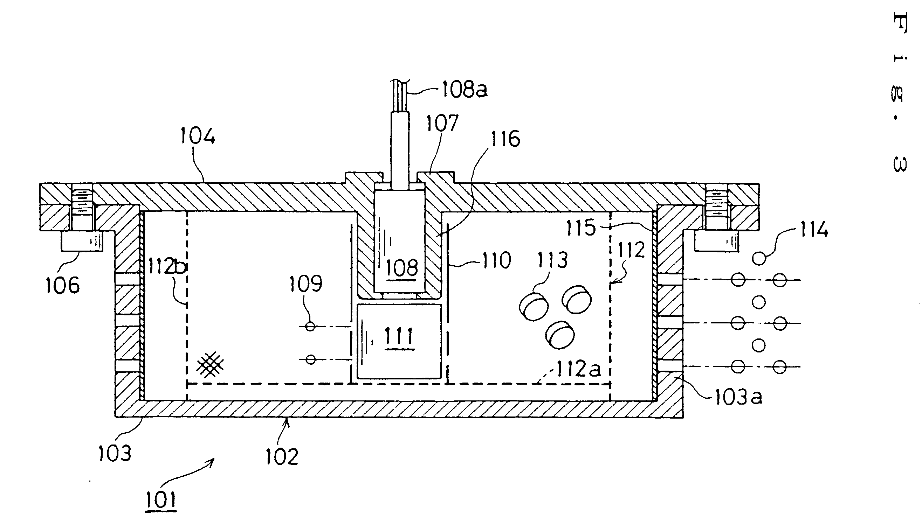

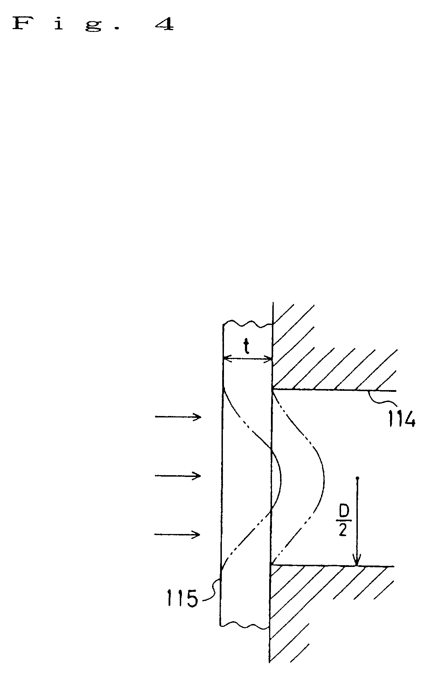

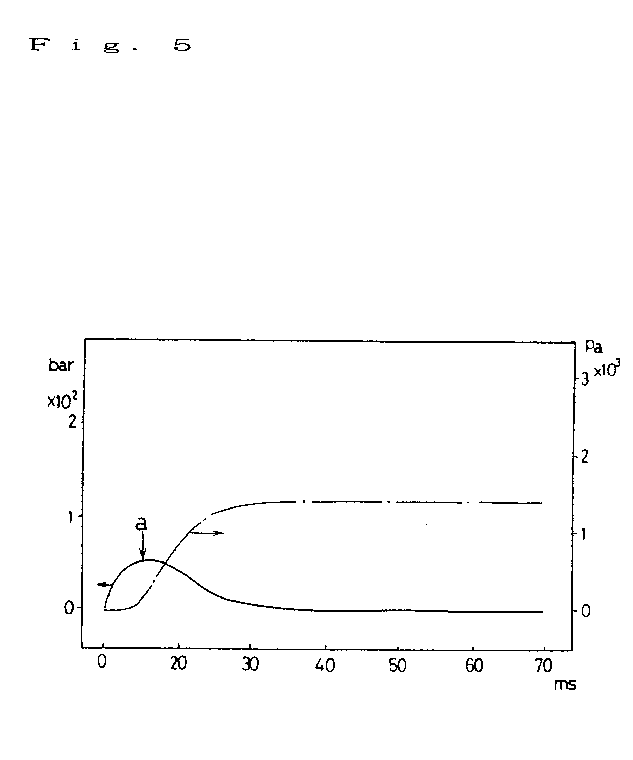

Fig. 1 is a vertical section of one embodiment of the invention; Fig. 2 is a graphical representation useful in understanding the ignition test; Fig. 3 is a vertical section of another embodiment of the invention; Fig. 4 is a view showing a flexural mode of a rupture plate; and Fig. 5 is a graphical representation of the gas pressure as effected in a test tank and a gas generator in accordance with the invention.

DESCRIPTION OF THE PREFERRED EMBODIMENTS

Any gas generator can be employed in the present invention provided that containing gas generants, at least one opening and at least one rupture plate each which is arranged on a side of upper stream with respect to each opening in a direction of a flow of the produced gas, and falling under the definition of claim 1.

For example, a gas generator 1 shown in Fig. 1 comprises a center room, a combustion room 6 around the center room and a surrounding room around the combustion room 6 annularly. A squib 3 and an enhancer 4 are placed in the center room. The combustion room 6 accommodates gas generants 7 and coolants 8 and the surrounding room accommodates filters 10. When the squib 3 is ignited, the enhancer 4 is set on fire and converted into a high-temperature gas which is admitted into the combustion room 6 through orifices 5. Then the gas generants 7 are ignited in the combustion room 6 and produce a gas. And the gas is cooled by the coolants 8, allowed to pass through inner openings 9 and the filters 10 for the removal of slag and discharged through outer openings 12 of the surrounding room.

Each rupture plate 11 abuts against the interior wall surface of the gas generator 1 at the inner end of each outer opening 12. In other words, each rupture plate is arranged on a side of upper stream with respect to each opening in a direction of a flow of the produced gas. In case the rupture plates 11 are disposed at gas outlets such as the outer openings 12 of the surrounding room, the arrangement can avoid an influence of an intense heat generated by the combustion of the gas generants 7 working on the rupture plates 11.

As an alternative to allowing the coolants 8 to occupy the combustion room 6, the coolants 8 may be disposed in the surrounding room with the filter 10 and a cup accommodating the gas generants 7 may be put in the combustion room 6 so as to mask the inner openings 9, so that the cup may serve as one kind rupture plates addition to the aforementioned rupture plates 11. In this case, with respect to the value of the parameter B in equation (1) for use in determining the thickness of the rupture plate, the values of the parameter B relative to the rupture plates located on a side of the inner openings 9 should be less than ones of the parameter B relative to the rupture plates 11 located on a side of the outer openings 12. Whereby, the rupture plates 11 located on the side of the outer openings 12 are ruptured later than the rupture plates located on the side of the inner openings 9. Consequently, the gas pressure within the combustion room 6 can be more reliably maintained at a predetermined level. The gas generator 1 may be provided with the rupture plates on the only side of the inner openings 9.

Provision of the gas generator 1 with the coolants 8 or the filters 10 may use or not depending on the kind of the gas generants 7. A variation with respect to arranging each space in the casing 2 of the gas generator 1 depends on the maximum gas pressure. For example, when the maximum gas pressure is lower than 100 [bars] as mentioned above, the strength of the casing 2 against pressure need not to be so high as to make the casing 2. Accordingly, the space in the casing 2 of the gas generator 1 need not to be divided.

The following specific examples will serve to illustrate the invention.

[Example 1]

The gas generator as shown in Fig. 1 contained 25.1 g tablets of gas generants, 360 number of outer openings (i.e. diffusers) and graphite sheets as rupture plates.

The tablet of gas generants was made of 9.4 g of 5-aminotetrazole (5-ATZ) and 15.7 g of potassium nitrate ($KNO_3$) with a press forming step and had 7 [mm] diameter and 5 [mm] height. The each outer opening had 1.5 [mm] diameter. The graphite sheet had a thickness of 0.38 [mm] and a tensile strength A of 55 [kgf/cm$^2$].

The gas generator was subjected to a 60-liter tank test at a room temperature of 25 °C and characteristic curves as shown in Fig. 2 were obtained, in which $t_1$ referred to time required for causing the ignition to occur, Pmax referred to maximum pressure attained in the test tank, and t-Pmax referred to time required for attaining the maximum pressure Pmax.

According to this example 1 concerning a 60-liter tank test, the time $t_1$ was 6.5 milliseconds, the time t-Pmax was 60.4 milliseconds and the maximum pressure Pmax was 235.2 [kPa]. These were satisfactory results.

Further, maximum pressure in the gas generator was 58 [bars]. The value of B [kgf/cm$^2$] was calculated from modified equation (1) as follows and it was found for the value of B to fall within a vicinity of a middle value of a range between 8 and 40.

$$B = \frac{t \times A}{D} = \frac{0.038 \times 55}{0.15} = 13.9$$

Characteristic values obtained at high and low ambient temperatures of +85 °C and -40 °C are given in Table 1. At these ambient temperatures, the gas generants were burned in a stabilized condition. The difference concerning the maximum internal pressures of the gas generator between the ambient temperatures +85 °C and -40 °C amounted to 9 [bars].

TABLE 1

|  | $t_1$ | t-Pmax | Pmax | Maximum gas pressure |
|---|---|---|---|---|
| +85 °C | 6.3 ms | 56.2 ms | 252.3 kPa | 62 bars |
| -40 °C | 7.7 ms | 65.2 ms | 218.4 kPa | 53 bars |

[Example 2]

The gas generator as shown in Fig. 1 contained 25.1 g tablets of gas generants, 90 number of outer openings (i.e. diffusers) and graphite sheets as rupture plates.

The tablet of gas generants was made in a manner similar to the tablet used in Example 1. The each outer opening had 3.0 [mm] diameter. The graphite sheet had a thickness of 0.76 [mm] and a tensile strength A of 55 [kgf/cm$^2$].

The gas generator was subjected to a 60-liter tank test at a room temperature of 25 °C .

According to this example 2 concerning a 60-liter tank test, the time $t_1$ was 4.6 milliseconds, the time t-Pmax was 76.4 milliseconds and the maximum pressure Pmax was 260.7 [kPa]. These were satisfactory results.

Further, maximum pressure in the gas generator was 61 [bars]. The value of B [kgf/cm$^2$] was calculated from modified equation (1) as follows and it was found for the value of B to fall within a vicinity of a middle value of a range between 8 and 40.

$$B = \frac{t \times A}{D} = \frac{0.076 \times 55}{0.30} = 13.9$$

Characteristic values obtained at high and low ambient temperatures of +85 °C and -40 °C are given in Table 2. At these ambient temperatures, the gas generants were burned in a stabilized condition. The difference concerning the maximum internal pressures of the gas generator between the ambient temperatures +85 °C and -40 °C amounted to 10 [bars].

TABLE 2

|        | $t_1$  | t-Pmax  | Pmax      | Maximum gas pressure |
|--------|--------|---------|-----------|----------------------|
| +85 °C | 4.6 ms | 71.2 ms | 288.1 kPa | 67 bars              |
| -40 °C | 5.5 ms | 82.3 ms | 232.4 kPa | 57 bars              |

[Example 3]

The gas generator as shown in Fig. 1 contained 25.1 g tablets of gas generants, 20 number of outer openings (i.e. diffusers) and aluminum foils as rupture plates.

The tablet of gas generants was made in a manner similar to the tablet used in Example 1. The each outer opening had 5.0 [mm] diameter. The aluminum foil had a thickness of 50 [μm] and a tensile strength A of 900 [kgf/cm$^2$].

The gas generator was subjected to a 60-liter tank test at a room temperature of 25 °C .

According to this example 3 concerning a 60-liter tank test, the time t, was 3.6 milliseconds, the time t-Pmax was 51.2 milliseconds and the maximum pressure Pmax was 317.5 [kPa]. These were satisfactory results.

Further, maximum pressure in the gas generator was 90.5 [bars]. The value of B [kgf/cm$^2$] was calculated from modified equation (1) as follows and it was found for the value of B to fall within a range between 8 and 40 and to be nearly 8.

$$B = \frac{t \times A}{D} = \frac{0.005 \times 900}{0.50} = 9.0$$

Characteristic values obtained at high and low ambient temperatures of +85 °C and -40 °C are given in Table 3. At these ambient temperatures, the gas generants were burned in a stabilized condition. The difference concerning the maximum internal pressures of the gas generator between the ambient temperatures +85 °C and -40°C amounted to 13.4 [bars].

TABLE 3

|        | $t_1$  | t-Pmax  | Pmax      | Maximum gas pressure |
|--------|--------|---------|-----------|----------------------|
| +85 °C | 4.1 ms | 48.3 ms | 333.9 kPa | 95.5 bars            |
| -40 °C | 6.6 ms | 57.8 ms | 279.5 kPa | 82.1 bars            |

[Example 4]

The gas generator as shown in Fig. 1 contained 25.1 g tablets of gas generants, 8 number of outer openings (i.e. diffusers) and aluminum foils as rupture plates.

The tablet of gas generants was made in a manner similar to the tablet used in Example 1. The two outer openings had 9.0 [mm] diameters, the three outer openings had 6.0 [mm] diameters and the three outer openings had 4.5 [mm] diameters respectively. The aluminum foil had a thickness of 100 [μm] and a tensile strength A of 900 [kgf/cm$^2$].

The gas generator was subjected to a 60-liter tank test at a room temperature of 25 °C .

According to this example 4 concerning a 60-liter tank test, the time $t_1$ was 4.3 milliseconds, the time t-Pmax was 49.8 milliseconds and the maximum pressure Pmax was 289.5 [kPa]. These were satisfactory results.

Further, maximum pressure in the gas generator was 63.3 [bars]. The values of B [kgf/cm$^2$] for the three kind of diameters were calculated from modified equation (1) as follows and they were found for the values of B to fall within a vicinity of a middle value of a range between 8 and 40.

$$\phi\ 9\ mm : B = \frac{t \times A}{D} = \frac{0.01 \times 900}{0.9} = 10$$

$$\phi\ 6\ mm : B = \frac{t \times A}{D} = \frac{0.01 \times 900}{0.6} = 15$$

$$\phi\ 4.5\ mm : B = \frac{t \times A}{D} = \frac{0.01 \times 900}{0.45} = 20$$

Characteristic values obtained at high and low ambient temperatures of +85 °C and -40 °C are given in Table 4. At these ambient temperatures, the gas generants were burned in a stabilized condition. The difference concerning the maximum internal pressures of the gas generator between the ambient temperatures +85 °C and -40 °C amounted to 13.7 [bars].

TABLE 4

|  | $t_1$ | t-Pmax | Pmax | Maximum gas pressure |
|---|---|---|---|---|
| +85 °C | 4.2 ms | 48.3 ms | 295.5 kPa | 72.1 bars |
| -40 °C | 4.5 ms | 52.4 ms | 277.9 kPa | 58.4 bars |

[Example 5]

The gas generator as shown in Fig. 1 contained 25.1 g tablets of gas generants, 12 number of outer openings (i.e. diffusers) and stainless steel foil as rupture plates.

The tablet of gas generants was made in a manner similar to the tablet used in Example 1. The each outer opening had 7.0 [mm] diameter. The stainless steel foil had a thickness of 46 [μm] and a tensile strength A of 5500 [kgf/cm$^2$].

The gas generator was subjected to a 60-liter tank test at a room temperature of 25 °C .

According to this example 5 concerning a 60-liter tank test, the time t, was 5.5 milliseconds, the time t-Pmax was 48.3 milliseconds and the maximum pressure Pmax was 280.3 [kPa]. These were satisfactory results.

Further, maximum pressure in the gas generator was 63.3 [bars]. The value of B [kgf/cm$^2$] was calculated from modified equation (1) as follows and it was found for the value of B to fall within a range between 8 and 40 and to be nearly 40.

$$B = \frac{t \times A}{D} = \frac{0.0046 \times 5500}{0.7} = 36.1$$

Characteristic values obtained at high and low ambient temperatures of +85 °C and -40 °C are given in Table 5. At these ambient temperatures, the gas generants were burned in a stabilized condition. The difference concerning the maximum internal pressures of the gas generator between the ambient temperatures +85 °C and -40 °C amounted to 10.7 [bars].

TABLE 5

|  | $t_1$ | t-Pmax | Pmax | Maximum gas pressure |
|---|---|---|---|---|
| +85 °C | 5.0 ms | 45.3 ms | 300.1 kPa | 74.2 bars |
| -40 °C | 7.1 ms | 55.2 ms | 259.3 kPa | 63.5 bars |

Comparative examples will be described from here, which are the comparative examples to be compared with the aforementioned examples of the present invention.

[Comparative Example 1]

A gas generator contained 25.1 g tablets of gas generants, 90 number of outer openings (i.e. diffusers) and graphite sheets as rupture plates.

The tablet of gas generants was made of 9.4 g of 5-aminotetrazole (5-ATZ) and 15.7 g of potassium nitrate ($KNO_3$) with a press forming step and had 7 [mm] diameter and 5 [mm] height, which was made in a manner similar to the tablet used in Example 1. The each outer opening had 3.0 [mm] diameter. The graphite sheet had a thickness of 0.38 [mm] and a tensile strength A of 55 [kgf/cm$^2$].

The gas generator was subjected to a 60-liter tank test at a room temperature of 25 °C

According to this comparative example 1 concerning a 60-liter tank test, the time $t_1$ was 5.8 milliseconds, the time t-Pmax was 3.0 seconds and the maximum pressure Pmax was 72.53 [kPa]. Further, maximum pressure in the gas generator was 15 [bars]. These indicated a low burning rate and a failure to build up gas pressure in the gas generator. The value of B [kgf/cm$^2$] was calculated from modified equation (1) and was found to be less than 8 as follows.

$$B = \frac{t \times A}{D} = \frac{0.038 \times 55}{0.3} = 6.96$$

[Comparative Example 2]

A gas generator contained 25.1 g tablets of gas generants, 150 number of outer openings (i.e. diffusers) and graphite sheets as rupture plates.

The tablet of gas generants was made in a manner similar to the tablet used in Example 1. The each outer opening had 2.4 [mm] diameter. The graphite sheet had a thickness of 1.76 [mm] and a tensile strength A of 55 [kgf/cm$^2$].

The gas generator was subjected to a 60-liter tank test at a room temperature of 25 °C .

According to this comparative example 2 concerning a 60-liter tank test, the time $t_1$ was 4.2 milliseconds, the time t-Pmax was 18.0 milliseconds and the maximum pressure Pmax was 360.6 [kPa]. Further, maximum pressure in the gas generator was 269 [bars]. These indicated that the burning rate and the pressure in this gas generator were so high that this gas generator had the possibility of danger. Accordingly, this gas generator could not be employed as a safe gas generator. The value of B [kgf/cm$^2$] was calculated from modified equation (1) and was found to be in excess of 40 as follows:

$$B = \frac{t \times A}{D} = \frac{0.176 \times 55}{0.24} = 40.3$$

[Comparative Example 3]

A gas generator contained 25.1 g tablets of gas generants, 40 number of outer openings (i.e. diffusers) and aluminum foils as rupture plates.

The tablet of gas generants was made in a manner similar to the tablet used in Example 1. The each outer opening had 3.0 [mm] diameter. The aluminum foil had a thickness of 136 [μm] and a tensile strength A of 980 [kgf/cm$^2$].

The gas generator was subjected to a 60-liter tank test at a room temperature of 25 °C .

According to this comparative example 3 concerning a 60-liter tank test, the time $t_1$ was 6.4 milliseconds, the time t-Pmax was 19.0 milliseconds and the maximum pressure Pmax was 420.3 [kPa]. Further, maximum pressure in the gas generator was 281.3 [bars]. These indicated that the burning rate and the pressure in this gas generator were so high that this gas generator had the possibility of danger. Accordingly, this gas generator could not be employed as a safe gas generator. The value of B [kgf/cm$^2$] was calculated from modified equation (1) and was found to be in excess of 40 as follows:

$$B = \frac{t \times A}{D} = \frac{0.0136 \times 980}{0.30} = 44.4$$

[Comparative Example 4]

A gas generator contained 25.1 g tablets of gas generants, 30 number of outer openings (i.e. diffusers) and stainless steel foils as rupture plates.

The tablet of gas generants was made in a manner similar to the tablet used in Example 1. The each outer opening had 6.0 [mm] diameter. The stainless steel foil had a thickness of 46 [μm] and a tensile strength A of 5500 [kgf/cm$^2$].

The gas generator was subjected to a 60-liter tank test at a room temperature of 25 °C .

According to this comparative example 4 concerning a 60-liter tank test, the time $t_1$ was 6.1 milliseconds, the time t-Pmax was 29.2 milliseconds and the maximum pressure Pmax was 370.5 [kPa]. Further, maximum pressure in the gas generator was 195.8 [bars]. These indicated that the maximum pressure and the pressure in this gas generator were so high that this gas generator had the possibility of danger. Accordingly, this gas generator could not be employed as a safe gas generator. The value of B [kgf/cm$^2$] was calculated from modified equation (1) and was found to be in excess of 40 as follows:

$$B = \frac{t \times A}{D} = \frac{0.0046 \times 5500}{0.6} = 42.2$$

Reference will now be had to a gas generator 101 shown in Fig. 3.

The cylindrical casing 102 of this gas generator consists of a first member 103 and a second member 104 secured to the first member 103 by means of bolts 106 so as to define a single compartment therein. The second member 104 has a holder portion 116 at the center for accommodating a squib 108 therein. The squib 108 is held in the holder portion 116 by a caulking portion 107. A larger diameter aluminum pipe 110 provided with openings 109 is arranged so as to surround the holder portion 116 with holding ignition agents 111 in it. The aluminum pipe 110 and the ignition agents are borne upon the base member 112a of a wire-net 112. The wire-net 112 is defined in the gas generator by the base member 112a and a cylindrical side member 112b. Tablets 113 of gas generants are filled into a space on the inner side of the cylindrical side member 112b. An open top of the first member 103 is covered by the second member 104.

The cylindrical side wall 103a of the first member 103 has at least 40 openings 114 through which a gas is to be ejected. A graphite sheet 115 as rupture plates for the openings 114 is adhered to the interior surface of the cylindrical side wall 103a. The openings 114 are circular in the embodiment shown in Fig. 3. However, they may be elliptical or square.

There shall now be described one utilization of the gas generator 101. An explosive contained in the squib 108 is set on fire when a current flows through lead pins 108a and then a bridge wire (not shown) incorporated in the squib 108. An end of the squib 108 is ruptured and a high-temperature and high-pressure gas is ejected. The high-temperature and high-pressure gas ignites the ignition agents 111 in an ignition cup and converts them into a high-temperature gas. The high-temperature gas burns the tablets 113 of the gas generants. The high internal pressure of the cylindrical casing 102 is built up by a gas produced by the combustion of the tablets 113. The graphite sheet 115 is withstood by its heat resistant of itself and keep the internal pressure of the cylindrical casing 102 high until a prescribed pressure. Thus problem in which the combustion rate of the gas generants is slow since the required pressure can not attain is avoided even when the tablets 113 are made of the non-sodium azide gas generants. When the internal pressure of the cylindrical casing 102 is built up to until the prescribed pressure, some portions of the graphite sheet 115 masking the openings 114 begin to rupture at some openings 114. The gas is ejected through the openings 114. In this time, the number of openings 114 opened by the rupture of the graphite sheet 115 depends on a value of the attained gas pressure. Accordingly, when the high gas pressure is attained, a larger number of openings 114 are opened for maintaining the gas pressure at the predetermined level.

In case of the gas generator shown in Fig. 3, the rupture plates are provided on the interior surface of the cylindrical casing 102 at the inner ends of the openings 114. In other words, It is preferable for each rupture plate to be arranged on a side of upper stream with respect to each opening in a direction of a flow of the produced gas. And, it is preferable for rupture plates to be provide on openings of the cylindrical casing 102 for discharging gas from the gas generator to exterior.

However, in case, a cylindrical partition having openings is disposed within the cylindrical casing 102 so as to divide the single compartment therein into inner side and outer side portions, rupture plates may be provided on the openings of the cylindrical partition. And also, the rupture plates may be provided on openings both of the cylindrical casing 102 and the cylindrical partition. The diameters of all the openings need not be equal to each other. A plurality of openings may have different diameters. For example, a plurality of openings may have three kind of diameters and may be provided with rupture plates made of graphite sheets respectively. In this case, it possible to obtain an improved reliability in controlling the gas pressure within the gas generator. Further, the rupture plates may consist of a plurality of layer. For example, the rupture plates may consist of an inner layer made of a graphite sheet and an outer layer made of aluminum foil.

. Reference will now be had to the results of an experiment conducted for the evaluation of the effect of gas pressure built up in the gas generator shown in Fig. 3.

In the first place, description will be focussed on the condition of the rupture plates made of graphite sheets as observed after the rupture. The gas generator as shown in Fig.3 was subjected to a test. 320 number of openings 114 having a diameter of 1.5 [mm] respectively were arranged at a stagger angle of 60 ° and at a pitch of 3 [mm].

Graphite sheets having thicknesses of 0.38 [mm] and tensile strengths of 55 [kgf/cm$^2$] (sold by Nippon Valqua Industries, Ltd. under the trade name of CARBON SHEET VF30) respectively were used as the rupture plates 115. A mixture of azodicarbonamide (ADCA)/KNO$_3$/ KCIO$_3$/Si rubber (as a binder) was granulated and allowed to have a grain size of 1.5 [mm] for use as gas generants, which featured a high rate of gasification and a small amount of residue. Therefore, it was not necessary for the gas generator to provide with filters for removing the residue. The experiment was conducted at an ordinary temperature.

A variation of the opening ratio depending on the amount of the gas generants ranging from 20 g to 25 g was given in Table 6. The opening ratio was the ratio of the number of open openings to the total number of openings. Hereon, the open openings means the openings at which the rupture plates were ruptured. Increasing an amount of the gas generants means increasing an amount of a produced gas, in other words, becoming a gas pressure higher. The number of open openings increased as the amount of the gas generants increased. Thus the opening area increased as the gas pressure increased. Hereon, the opening area means the total area of the open openings.

The rupture plates which were not ruptured were found to swell outwardly at the openings.

This means that the flexible rupture plate 115 is ruptured after swelling outwardly at the opening 114 as indicated by two-dot chain lines in Fig. 4, when the radius D/2 of the opening 114 and the thickness t of the rupture plate 115 on the basis of its tensile strength are properly selected as shown in Fig.4.

TABLE 6

| amount of gas generants (g) | Number of opened openings | Opening ratio (%) (1) | Opening area (cm$^2$) (2) |
|---|---|---|---|
| 20 | 194 | 61 | 3.43 |
| 22 | 216 | 68 | 3.82 |
| 23 | 235 | 73 | 4.15 |
| 24 | 251 | 78 | 4.44 |
| 25 | 263 | 81 | 4.65 |

Notes:

(1) The expression "Opening ratio" as used herein meant "the ratio of the number of openings at which the rupture plates were ruptured to the total number of openings (i.e. 320)".

(2) The expression "Opening area" as used herein meant "the area of openings at which the rupture plates were ruptured". Incidentally, the area of an opening is (0.075)$^2$ X 3.14 [cm$^2$].

Fig.5 shows a characteristics of a 60 liter-tank test of the present invention. In Fig. 5, the solid curve represents how the gas pressure [bars] in the gas generator varies with time, while the dot-dash curve represents how the pressure [Pa] in the tank used in the 60-liter tank test vary with time. The gas pressure in the gas generator reaches a maximum value at a point a and maintains at about 50 [bars] during a lapse of a prescribed time and then follows a gradual pressure reduction. When the gas pressure in the gas generator is maintained at a low level of gas pressure such as about 50 [bars], the casing of the gas generator need not be highly pressure-resistant. Consequently, a reduction in weight is achieved and the space requirement is reduced.

Further, when the gas pressure in the gas generator is maintained at a low level of gas pressure such as about 50 [bars] during the lapse of the prescribed time, and even if gas generants which have a high pressure exponent and of which a burning rate becomes high as the pressure becomes high are used, the burning rate can be prevented from becoming high and a stable burning can be attained. Therefore, the gas generator in accordance with the present invention permits the gas generants having a high rate of gasification to be employed even if the gas generants have a high pressure exponent. And then a reduction in weight is achieved and the space requirement is further reduced by using the gas generants having high rate of gasification.

FIELD OF INDUSTRIAL UTILIZATION

Even if gas generants are the gas generants such non-azide gas generants which have a burning rate greatly affected by a change in the ambient temperature, the gas generator according to the present invention can burn the gas generants in a stabilized condition and at a riskless burning rate.

**Claims**

**1.** A gas generator (1; 101) comprising:

a casing (2; 102);

at least one opening (12; 114) through which a gas produced from gas generants (7; 113) accommodated in said casing (2; 102) is allowed to pass and

at least one rupture plate (11; 115) which abuts against the interior wall surface of said casing (2; 102) so as to mask said openings (12; 114) and each of which is arranged upstream with respect to each opening (12; 114) in a direction of a flow of the produced gas;

**characterized in that**

said gas generants (7; 113) are combinations of oxidizer and fuel including compounds containing nitrogen except inorganic azide;

the rupture plate(s) (11; 115) is/are provided at outer opening (s) (12; 114) for the casing (2, 102) for the gas of the gas generator (1; 101) exiting therethrough; and

the thickness $\underline{t}$ [cm] of each rupture plate (11; 115) and the circle equivalent diameter $\underline{D}$ [cm] of each opening (12; 114) are given by the following equation (1):

$$t = \frac{B \times D}{A} \tag{1}$$

where

B = parameter assuming a value ranging from 8 to 40,

A = tensile strength of each rupture plate (11; 115) [bar] (1.02 kgf/cm$^2$).

2. A gas generator (1; 101) as defined in claim 1, wherein said gas generator (1; 101) has a plurality of outer openings (12; 114) having different circle equivalent diameters D under the condition that thickness $\underline{t}$ [cm] of the rupture plates (11; 115) is fixed at a uniform value and said parameter B falls within a range between 8 and 40.

3. A gas generator (1; 101) as defined in claim 1 or 2, wherein the ratio of the total area of outer openings (12; 114) to the amount of the produced gas is greater than or equal to 0.143 cm$^2$/liter in the standard state, i.e. at 1 atmosphere and at 273 K.

4. A gas generator (1; 101) as defined in any of claims 1 to 3, wherein the gas pressure within said gas generator (1; 101) is not built up above 100 bars.

5. A gas generator (1; 101) as defined in any of claims 1 to 4, wherein said rupture plates (11; 115) are made up of at least one selected from the group consisting of metal foils, metal sheets, graphite sheets and heat resistant polymer sheets.

6. A gas generator (1; 101) as defined in claim 5, wherein said metal foil or said metal sheet is made up of at least one selected from the group consisting of a stainless steel, an aluminum alloy, magnesium, titanium, a titanium alloy, copper, a copper alloy, nickel, a nickel alloy, zinc and a zinc alloy.

7. A gas generator (1; 101) as defined in claim 1, wherein said compound containing nitrogen is at least one selected from the group consisting of tetrazole derivatives, guanidine derivatives, azodicarbonamide derivatives, hydrazine derivatives and triazole derivatives.

8. A gas generator (1; 101) as defined in claim 1, wherein said oxidizer is at least one selected from the group consisting of nitrate, oxo-halogenate and metal oxide.

9. A gas generator (1; 101) as defined in claim 1, wherein the pressure exponent of said gas generants (7; 113) is in a range from 0.4 to 1.0.

10. A gas generator (1; 101) as defined in claim 1, wherein said gas generator (101) has a cylindrical casing (102).

11. Use of a gas generator (1; 101) according to any of the claims 1 to 10 for inflating an airbag in a vehicle.

**Patentansprüche**

1. Gasgenerator (1; 101), der umfaßt:

   Gehäuse (2; 102);
   mindestens eine Öffnung (12; 114), durch welche einem Gas der Durchgang gewährt wird, das aus einem in dem Gehäuse (2; 102) untergebrachten Gasentwickler (7; 114) erzeugt worden ist und
   mindestens eine Berstscheibe (11; 115), welche so gegen die innere Wandfläche des Gehäuses (2; 192) stößt, daß die Öffnungen (12; 114) abgedeckt werden und jede von diesen in Bezug auf jede Öffnung (12; 114) in einer Richtung eines Flusses des erzeugten Gases stromaufwärts angeordnet ist;

   **dadurch gekennzeichnet, daß**
   die Gasentwickler (7; 113) Kombinationen von Oxidationsmittel und Brennstoff, der Stickstoff enthaltende Verbindungen außer anorganischen Aziden einschließt, sind;
   die Berstscheibe(n) (11; 115) an der/den Außenöffnung(en)(12; 114) des Gehäuses (2; 102) für das dadurch verlassende Gas des Gasgenerators (1; 101) bereitgestellt ist/sind; und
   die Dicke t [cm] jeder Berstscheibe (11; 115) und der Kreisäquivalentdurchmesser D [cm] jeder Öffnung (12; 114) durch die folgende Gleichung (1) gegeben werden:

$$t = \frac{B \times D}{A} \tag{1}$$

   worin B = Parameter, der einen Wert von 8 bis 40 annehmen kann, A = Bruchfestigkeit jeder Berstscheibe (11; 115) [Bar] (1,02 kgf/cm$^2$).

2. Gasgenerator (1; 101) nach Anspruch 1, wobei der Gasgenerator (1; 101) eine Vielzahl von Außenöffnungen (12; 114) mit verschiedenen Kreisäquivalentdurchmessern D unter der Bedingung besitzt, daß die Dicke t [cm] der Berstscheiben (11; 115) auf einen einheitlichen Wert festgelegt ist und der Parameter B in den Bereich zwischen 8 und 40 fällt.

3. Gasgenerator (1; 101) nach Anspruch 1, wobei das Verhältnis der Gesamtfläche der Außenöffnungen (12; 114) zu der Menge des erzeugten Gases größer oder gleich 0,143 cm$^2$/Liter in dem Standardzustand, d.h. bei 1 Atmosphäre und 273 K, ist.

4. Gasgenerator (1; 101) nach einem der Ansprüche 1 bis 3, wobei ein Gasdruck in dem Gasgenerator (1; 101) von nicht über 100 Bar aufgebaut wird.

5. Gasgenerator (1; 101) nach einem der Ansprüche 1 bis 4, wobei die Berstscheiben (11; 115) aus mindestens einem Bestandteil zusammengesetzt sind, der aus der Gruppe von Metallfolien, Metallblättern, Graphitblättern und wärmebeständigen Polymerblättern ausgewählt wurde.

6. Gasgenerator (1; 101) nach Anspruch 5, wobei die Metallfolie oder das Metallblatt aus mindestens einem Bestandteil zusammengesetzt ist, der aus der Gruppe von rostfreiem Stahl, einer Aluminiumlegierung, Magnesium, Titan, einer Titanlegierung, Kupfer, einer Kupferlegierung, Nickel, einer Nickellegierung, Zink und einer Zinklegierung ausgewählt wurde.

7. Gasgenerator (1; 101) nach Anspruch 1, wobei die Stickstoff enthaltende Verbindung aus der Gruppe ausgewählt wurde, die aus Tetrazolderivaten, Guanidinderivaten, Azodicarbonamidderivaten, Hydrazinderivaten und Triazolderivaten besteht.

8. Gasgenerator (1; 101) nach Anspruch 1, wobei das Oxidationsmittel mindestens ein Bestandteil aus der Gruppe ist, die aus Nitrat, Oxohalogenat und Metalloxid besteht.

9. Gasgenerator (1; 101) nach Anspruch 1, wobei der Druckexponent des Gasentwicklers (7; 113) in einem Bereich von 0,4 bis 1,0 liegt.

10. Gasgenerator (1; 101) nach Anspruch 1, wobei der Gasgenerator (101) ein zylindrisches Gehäuse (102) besitzt.

**11.** Verwendung eines Gasgenerators (1; 101) nach einem der Ansprüche 1 bis 10 zum Aufblasen eines Airbags, bzw. Prallsacks in einem Fahrzeug.

**Revendications**

**1.** Générateur de gaz (1 ; 101) comprenant :

un boîtier (2 ; 102) ;

au moins une ouverture (12 ; 114) à travers laquelle un gaz produit à partir de produits gazogènes (7 ; 113) logés dans ledit boîtier (2 ; 102) est laissé passer et

au moins une plaque de rupture (11 ; 115) qui vient en butée contre la surface de paroi intérieure dudit boîtier (2 ; 102) de façon à masquer lesdites ouvertures (12 ; 114) et dont chacune est agencée en amont par rapport à chaque ouverture (12 ; 114) dans une direction d'un écoulement du gaz produit ;

**caractérisé en ce que**
lesdits produits gazogènes (7 ; 113) sont des combinaisons d'oxydant et de carburant comprenant des composés contenant de l'azote excepté un azoture inorganique ;
la (les) plaque(s) de rupture (11 ; 115) est/sont disposée(s) au niveau de la (les) ouverture(s) exteme(s) (12 ; 114) du boîtier (2 ; 102) pour le gaz du générateur de gaz (1 ; 101) sortant à travers celles-ci ; et
l'épaisseur t [cm] de chaque plaque de rupture (11 ; 115) et le diamètre équivalent au cercle D [cm] de chaque ouverture (12 ; 114) sont donnés par l'équation (1) suivante

$$t = \frac{B \times D}{A} \tag{1}$$

où

B = paramètre supposant une valeur variant de 8 à 40,
A = résistance à la traction de chaque plaque de rupture (11 ; 115) [bar] (1,02 kgf/cm$^2$).

**2.** Générateur de gaz (1 ; 101) selon la revendication 1, dans lequel ledit générateur de gaz (1 ; 101) comporte une pluralité d'ouvertures externes (12 ; 114) ayant différents diamètres équivalents au cercle D dans la condition que l'épaisseur t [cm] des plaques de rupture (11 ; 115) est fixée à une valeur uniforme et ledit paramètre B se situe dans une plage allant de 8 à 40.

**3.** Générateur de gaz (1 ; 101) selon la revendication 1 ou 2, dans lequel le rapport de l'aire totale des ouvertures externes (12 ; 114) sur la quantité du gaz produit est supérieur ou égal à 0,143 cm$^2$/litre à l'état standard, à savoir à un 1 atmosphère et à 273 K.

**4.** Générateur de gaz (1 ; 101) selon l'une quelconque des revendications 1 à 3, dans lequel la pression de gaz à l'intérieur dudit générateur de gaz (1 ; 101) ne s'accumule pas au-dessus de 100 bars.

**5.** Générateur de gaz (1 ; 101) selon l'une quelconque des revendications 1 à 4, dans lequel lesdites plaques de rupture (11 ; 115) sont constituées d'au moins un élément choisi dans le groupe constitué par les films métalliques, les feuilles métalliques, les feuilles en graphite et les feuilles en polymère résistant à la chaleur.

**6.** Générateur de gaz (1 ; 101) selon la revendication 5, dans lequel ledit film métallique ou ladite feuille métallique est constitué d'au moins un élément choisi dans le groupe constitué par un acier inoxydable, un alliage d'aluminium, du magnésium, du titane, un alliage de titane, du cuivre, un alliage de cuivre, du nickel, un alliage de nickel, du zinc et un alliage de zinc.

**7.** Générateur de gaz (1 ; 101) selon la revendication 1, dans lequel ledit composé contenant de l'azote est au moins un composé choisi dans le groupe constitué par les dérivés de tétrazole, les dérivés de guanidine, les dérivés d'azodicarbonamide, les dérivés d'hydrazine et les dérivés de triazole.

8.  Générateur de gaz (1 ; 101) selon la revendication 1, dans lequel ledit oxydant est au moins un élément choisi dans le groupe constitué par un nitrate, un oxo-halogénate et un oxyde métallique.

9.  Générateur de gaz (1 ; 101) selon la revendication 1, dans lequel l'exposant de pression desdits produits gazogènes (7 ; 113) est dans la plage allant de 0,4 à 1,0.

10. Générateur de gaz (1 ; 101) selon la revendication 1, dans lequel ledit générateur de gaz (101) comporte un boîtier cylindrique (102).

11. Utilisation d'un générateur de gaz (1 ; 101) selon l'une quelconque des revendications 1 à 10 pour gonfler un coussin d'air dans un véhicule.

F i g .  1

Fig. 2

Fig. 3

F i g . 4

F i g . 5